# EUROPEAN PATENT APPLICATION

(11) **EP 4 736 633 A1**
(43) Date of publication of application: **06.05.2026**
(21) Application number: 25212951.5
(22) Date of filing: 03.11.2025
(51) Int. Cl.: A01G 25/09

(54) **IRRIGATION MACHINE WITH ROTATING CANTILEVER ARM**

(30) Priority: 05.11.2024 IT 202400024864
(71) Applicant: FARMFRONT S.p.A., 41014 Castelvetro di Modena (MO) (IT)
(72) Inventor: VANDELLI, Davide, 41014 Castelvetro di Modena (MO) (IT)
(74) Representative: Gagliardelli, Fabrizio

(57) **Abstract**

An irrigation machine (1) comprises a wing (10) on which irrigators are distributed and at one end of which an arm (3) suspended in cantilever-like fashion is jointed and rotatable, wherein the arm is also provided with irrigators, and able to be arranged in a plurality of angularly spaced operating positions, including a position aligned with the wing (10), a position perpendicular to the wing (10) and an intermediate position between the aligned position and the perpendicular position.

## Description

The present invention relates to the field of irrigation machines intended for the agricultural technical field.

The irrigation machines used to irrigate large-sized plots of land are made up of a series of spans consisting of metal frameworks that comprise tubes for conveying water and have multiple sprinklers.

Irrigation machines can be constructed according to various configurations, including so-called "linear", "pivot" and "hippodrome" types. In the pivot type, a number of spans are arranged in a row and joined by self-propelled support elements, provided with wheels. The support element located at the innermost end of the row is fixed, i.e. it does not move and to this end it is anchored to the ground. The other support elements are motorised, and their forward movement produces the rotation of the wing around the fixed central element.

In the linear type, unlike the pivot type, all the support elements are motorised, and the wing translates in a direction perpendicular to its longitudinal extension. The machine reverses direction as soon as it reaches the end of travel.

Hippodrome-type machines translate like linear ones, but unlike the latter, on reaching the end of travel, they rotate 180 degrees about one of the support elements placed at the ends of the wing and then resume moving forward linearly.

In some known machines, a support element placed at one end of the wing is jointed to a so-called "rotating cantilever arm".

The rotating cantilever arm is a rotatable arm, which is suspended in cantilever-like fashion, is provided with respective sprinklers and has the main function of enabling the irrigation of areas situated beyond the last support element, thereby increasing the irrigated surface.

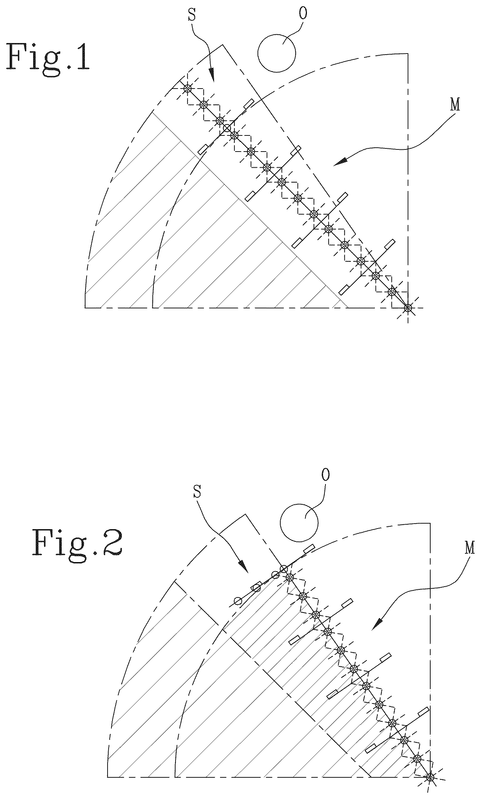

The rotating cantilever S of the known machines M can rotate about a vertical axis that passes through its joint with the last span of the machine M, so as to be able to be arranged alternately in a position of alignment with the series of spans or in a position perpendicular to the spans, set back relative to the direction of motion of the machine (see figures 1 - 4).

This features proves useful in the case where the machine has to irrigate field areas comprising trees, poles, buildings, or other obstacles.

In fact, when the machine M travels along an area of the field free of obstacles O, the cantilever remains aligned, i.e. set at a flat angle with the row of spans, whereas when it is necessary to get past an obstacle O, the cantilever rotates and positions itself at a right angle.

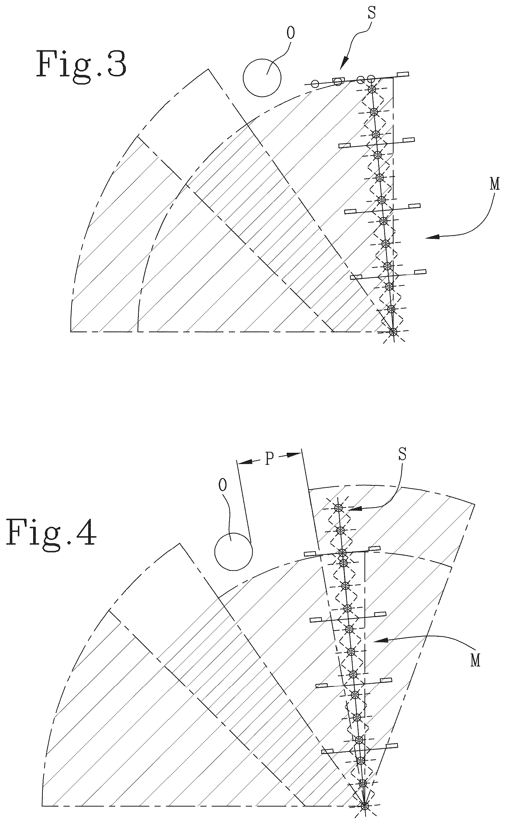

A limit of the known solution is that when the machine M needs to avoid an obstacle O, a significant portion P of the surrounding area of the field is not irrigated because of the size of the cantilever S, which rotates from the aligned position to the transverse one and then back again to the aligned one (see figures 3 and 4).

In this context, the technical task at the basis of the present invention is to propose an irrigation machine that overcomes the abovementioned drawback.

The stated technical task is achieved by an irrigation machine constructed in accordance with the appended claims.

Additional features and advantages of the present invention will emerge more clearly from the approximate and thus non-limiting description of a preferred but not exclusive embodiment of an irrigation machine, as illustrated in the appended claims, in which:
- figures 1 - 4 are schematic top views of a known irrigation machine, shown in different operating configurations;
- figures 5 and 6 are schematic top views of a first embodiment of the irrigation machine according to the invention; and
- figures 7 and 8 are schematic top views of a second embodiment of the irrigation machine according to the invention.

With reference to the figures, an irrigation machine according to the invention is generically denoted by the number 1.

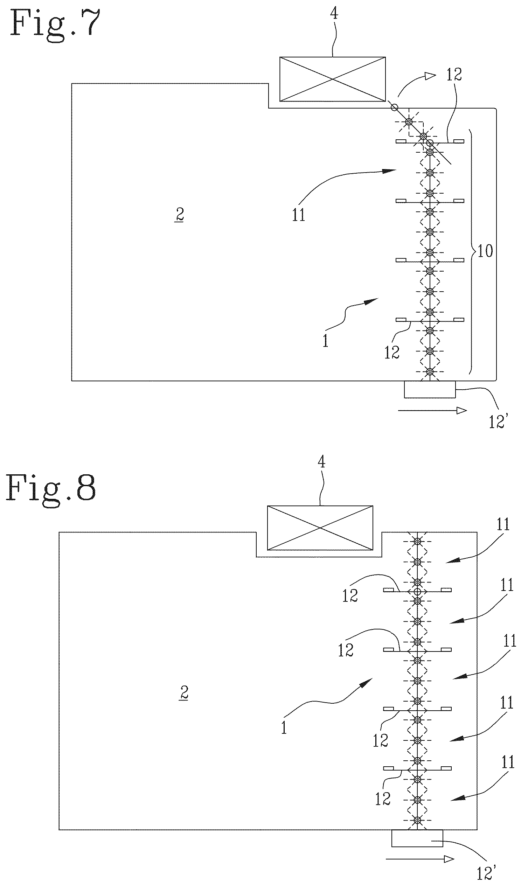

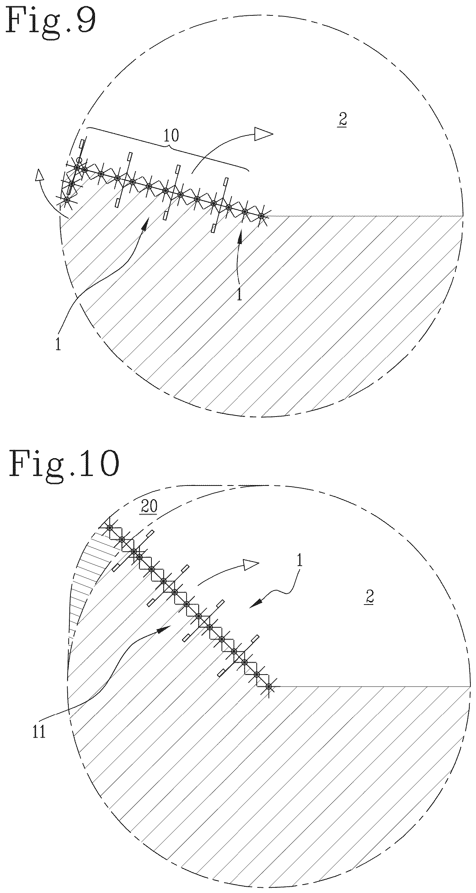

The figures show the invention as a self-propelled irrigation machine 1 of the linear or hippodrome type (figures 7 and 8) or of the pivot type (figures 9 and 10), but it is not excluded that the inventive concept presented here may also be applied to other types of irrigation machines.

The proposed machine 1 comprises a wing 10 made up of a rectilinear series of lattice-like spans 11, defined between support elements 12, or turrets, equipped with wheels. A main turret 12' of a larger size may be located at one or both ends of the wing 10, according to the type of machine.

In the case of a pivot machine, the main turret 12' is a central turret, which, during use, remains stationary, and to which the wing 10 is rotatably connected so as to rotate around it to describe a circle. The support elements 12 are preferably not motorised, since there is a motorised driving apparatus mounted on the main turret 12' which draws the mobile irrigation wing 10 in rotation.

If the machine 1 is of the linear or hippodrome type, it may or may not have two main turrets, each located at an opposite end of the wing 10. In the case of a linear turret, in particular, the wing 10 and the turrets 12 are fixed and solidly joined to each other. In any case, in both types, the machine 1 is driven in such a way as to translate along a direction perpendicular to the longitudinal extension of the wing 10. In these types of machines 1, the intermediate supporting turrets 12 can also be equipped with wheels driven by motorised apparatuses.

Multiple sprinkler irrigators are distributed along the spans 11 of the wing 10, supplied water through special pipes, or by drawing it from a canal or another water source, to enable the wing 10 to irrigate vast portions of land.

At one end of the wing 10, an arm 3, preferably having an elongated lattice-like structure, is fixed and suspended in cantilever-like fashion, with the possibility of rotating, the arm 3 being provided with a plurality of sprinkler irrigators. In the case of a pivot machine, the cantilever arm 3 is mounted jointed to the supporting turret 12 opposite the main fixed turret 12'.

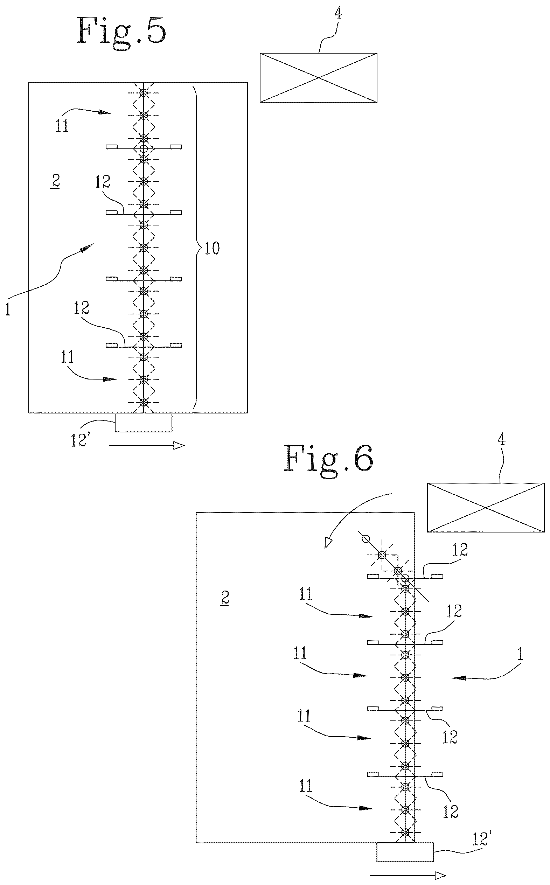

The arm 3 is able to rotate about a vertical axis passing through the outer end of the wing 10, i.e. the outer supporting turret 12 and, according to an important aspect of the invention, it is able to be arranged in a plurality of angularly spaced operating positions, including: at least one position aligned with the wing 10 (shown in figures 5, 8 and 10), at least one position perpendicular to the wing 10 (shown in figure 9) and at least one intermediate position between the aligned position and the perpendicular position (figures 6 and 7).

More precisely, the cantilever arm 3 is preferably configured to be arranged in a plurality of operating positions interposed between the aligned and perpendicular positions, in which it is envisaged that it can stop.

According to a preferred embodiment, the cantilever arm 3 can rotate by 360 degrees and is able to be arranged, and stop, in any position in the full circle; moreover, it can rotate in both directions of rotation. In other words, preferably, the cantilever arm 3 of the invention is able for a continuous and non-discrete variation of the operating position.

For this purpose, the machine 1 of the invention can be provided with a motorised slewing ring that controls the rotation of the cantilever arm 3 and is mounted on the outer supporting turret 12.

The arm 3 is mounted on the respective supporting turret 12 at a height such as to be able to pass over the wing 10 of the machine 1, when it is in the inner aligned position opposite the position in which it extends longitudinally beyond the wing 10. More generally, the arm 3 is positioned so as to be able to rotate freely without colliding with the wing 10 and without colliding with other parts of the machine 1.

Before details are provided about further preferred constructive aspects, the operation of the invention will be illustrated here below, with the help of figures 5 - 10.

Figures 5 - 8 illustrate an example of operation of the proposed machine 1, in the linear or hippodrome version thereof. When the machine 1, during the operation of irrigating a field 2, comes near an obstacle 4, which in the example shown is a building, the cantilever arm 3 rotates in the direction opposite to the motion of translation of the machine 1, and is brought to an angle smaller than a right angle, relative to the length of the wing 10, the angle being chosen so as to also allow for irrigating portions of land as close as possible to the obstacle 4. Once the obstacle 4 has been passed in the forward travel motion of the machine 1, the arm 3 is brought back into the original position.

It should be noted that, in the event that, in order to get past the obstacle 4, it is necessary to incline the cantilever arm 3 by 90 degrees relative to the length of the wing 10, after getting past the obstacle 4, the arm 3 could rotate away from the latter by 270 degrees and be brought back into the aligned, projecting position, in a position very close to that of the obstacle 4, thereby irrigating in the areas adjacent thereto and thus overcoming the limits of the prior art.

Figures 9 and 10 illustrate a possible use of the machine 1 of the pivot type according to the invention.

As shown in the figures, if a field 2 to be irrigated has an irregular shape, for example having a projection 20 that extends beyond the rest of the perimeter, the latter, too, can be effectively irrigated by the cantilever arm 3 of the proposed machine 1, given that it can be arranged in any angular position, and not only in the aligned position and in the perpendicular position.

From a structural point of view, the invention provides further advantageous features.

Unlike the traditional solutions, the cantilever arm 3 of the proposed machine 1 conveys water to the sprinklers by means of flexible tubes, for example made of plastic material rather than metal pipes. In this manner, the structure is made lighter, and a lighter counterweight can be used. The counterweight is obviously arranged in a position opposite the arm 3 with respect to its rotation axis. In detail, unlike what occurs in the known solutions, it is not necessary to fill the counterweight with water to adapt it to the weight of the arm 3, likewise weighed down heavily by the load of water; this aspect will be returned to in a subsequent paragraph.

To be precise, the arm 3 is preferably made with an aluminium framework and includes two lines for conveying water, for example comprising two polyethylene tubes.

The lighter weight of the cantilever arm 3 of the invention compared to the known ones enables it to be easily moved over 360 degrees.

The lighter weight also allows the machine 1 to weigh down less on the ground it must irrigate, thus avoiding problems of compacting of the ground itself and limiting or preventing cases of sinking of the outer supporting turret 12 which bears the arm 3.

A further advantage tied to the lighter weight is that, for the purposes of the rotation of the cantilever arm 3, unlike what occurs in the solutions available in the market today, the water present inside the arm 3 and the counterweight no longer needs to be dumped beforehand onto the ground. In this manner, one avoids the waste of water and excessive irrigation of the areas of the field 2 near the obstacles, which would otherwise be affected by the dumping.

Preferably, the machine 1 comprises a position sensor to determine the angular position of the cantilever arm 3. For example, the sensor can be an encoder associated with the aforesaid motorised slewing ring.

Furthermore, the machine 1 comprises a position detector, such as, for example, a GPS receiver, which provides the absolute position of the arm 3, and which can be mounted on the cantilever arm 3 itself.

The signals of these sensors can be processed by a control unit, such as a microprocessor or a PLC, which is configured to produce a command signal that controls the motorised slewing ring, so as to be able to program and adjust the movements of the arm 3 for the purposes of by-passing obstacles and so as also to be able to predetermine acceleration or deceleration ramps of the rotation, thereby avoiding negative mechanical stresses on the structure of the machine 1.

## Claims

1. An irrigation machine (1) comprising a wing (10) on which irrigators are distributed and at one end of which an arm (3) suspended in cantilever-like fashion is jointed and rotatable, wherein the arm is also provided with irrigators, and able to be arranged in a plurality of angularly spaced operating positions, including at least one position aligned with the wing (10), at least one position perpendicular to the wing (10) and at least one intermediate position between the aligned position and the perpendicular position
said cantilever arm (3) being able to rotate by 360 degrees.

2. The machine (1) according to at least one of the preceding claims, comprising an apparatus for rotating the cantilever arm (3) provided with a motorised slewing ring.

3. The machine (1) according to at least one of the preceding claims, wherein the cantilever arm (3) is positioned in such a way as to be able to rotate without colliding with the wing (10).

4. The machine (1) according to at least one of the preceding claims, wherein the cantilever arm (3) comprises an elongated lattice-like structure and one or more flexible tubes connected to said irrigators.

5. The machine (1) according to at least one of the preceding claims, wherein the wing (10) includes a plurality of lattice-like spans (11) and a plurality of supporting elements (12) equipped with wheels that are connected to the ends of the spans (11).

6. The machine (1) according to the preceding claim, wherein one of the supporting elements (12) is able to be fixed, during use, and is coupled rotoidally to the wing (10), which is able to rotate about said supporting element (11), driven by a motorised apparatus with which the machine (1) is provided.

7. The machine (1) according to one or more of the preceding claims, wherein the machine (1) comprises one or more motorised locomotion apparatus able to enable a movement thereof along a direction perpendicular to the longitudinal extension of the wing (10).

8. The machine (1) according to at least one of the preceding claims, comprising at least one sensor for detecting a position of the arm (3) and at least one processing unit configured to produce a control signal able to automatically adjust the rotation of the arm (3) as a function of the position detected by the sensor.
